# EUROPEAN PATENT APPLICATION

(11) **EP 4 567 607 A1**
(43) Date of publication of application: **11.06.2025**
(21) Application number: 23856031.2
(22) Date of filing: 14.03.2023
(51) Int. Cl.: G06F 11/36

(54) **TEST CASE SET EVOLUTION METHOD AND APPARATUS, COMPUTING DEVICE CLUSTER, AND STORAGE MEDIUM**

(30) Priority: 22.08.2022 CN 202211009117
(71) Applicant: Huawei Cloud Computing Technologies Co., Ltd., Guiyang, Guizhou 550025 (CN)
(72) Inventor: WU, Tianyong, Guiyang, Guizhou 550025 (CN); LIU, Yiming, Guiyang, Guizhou 550025 (CN); LIANG, Guangtai, Guiyang, Guizhou 550025 (CN)
(74) Representative: Gill Jennings & Every LLP
(86) International application number: PCT/CN2023/081401
(87) International publication number: WO 2024/040934

(57) **Abstract**

A test case set evolution method and apparatus, a computing device cluster, and a storage medium are disclosed, and belong to the field of computer technologies. A computing device runs a first test case set based on a code file, and obtains description information of the first test case set in a running process, to determine evolution strategy information for the first test case set based on running description information, so as to obtain an evolved second test case set based on the code file and the first test case set in a target evolution manner indicated by the evolution strategy information. According to the method, targeted evolution strategy information can be determined based on the running description information generated in a process of testing the code file based on the first test case set, to provide guidance on an evolution process of the test case set. In this way, efficiency of evolving the test case set is improved, and efficiency of managing and maintaining the test case set is improved.

## Description

This application claims priority to Chinese Patent Application No. 202211009117.7, filed with the China National Intellectual Property Administration on August 22, 2022 and entitled "TEST CASE SET EVOLUTION METHOD AND APPARATUS, COMPUTING DEVICE CLUSTER, AND STORAGE MEDIUM", which is incorporated herein by reference in its entirety.

### TECHNICAL FIELD

This application relates to the field of computer technologies, and in particular, to a test case set evolution method and apparatus, a computing device cluster, and a storage medium.

### BACKGROUND

During software development, a test case set is used to test a process of running a code file, to determine whether software functions properly. As the software continuously evolves with an increase of requirements and performance maintenance, the test case set also needs to evolve accordingly to ensure that a test can be effectively performed.

In a current test case evolution solution, automatic tools such as a random test generator (randoop) and a bytecode symbolic executor (java bytecode symbolic executor, JBSE) are used to generate a new test case set for a code file of to-be-tested software.

However, in the foregoing technical solution, new test case sets are fully generated for the to-be-tested software. As a result, a large quantity of newly generated test case sets are accumulated in a process of continuous evolution of the test case set. This affects efficiency of managing and maintaining the test case set.

### SUMMARY

This application provides a test case set evolution method and apparatus, a computing device cluster, and a storage medium, to improve efficiency of evolving a test case set, and further improve efficiency of managing and maintaining the test case set. The technical solutions are as follows.

According to a first aspect, a test case set evolution method is provided. The method includes:
running a first test case set based on a code file;
obtaining running description information in a process of running the first test case set based on the code file;
determining evolution strategy information for the first test case set based on the running description information, where the evolution strategy information indicates a target evolution manner of the first test case set; and
obtaining an evolved second test case set based on the evolution strategy information, the code file, and the first test case set.

The code file includes source code for implementing a software function. The first test case set is used to test whether a process of running the code file meets an expectation.

According to the technical solution, targeted evolution strategy information can be determined based on the running description information generated in a process of testing the code file based on the first test case set, to provide guidance on an evolution process of the test case set. In this way, efficiency of evolving the test case set is improved, and efficiency of managing and maintaining the test case set is improved.

In a possible implementation, the obtaining running description information in a process of running the first test case set based on the code file includes at least one of the following:
determining a code segment that is executed in the running process and that is in the code file; and
determining error information in the running description information based on an erroneous test case in which an error occurs in the running process, where the error information indicates a case location at which an error occurs in the erroneous test case and a type of the error.

In this embodiment of this application, the running description information can be used to analyze an abnormal case that occurs in a process in which the first test case set tests the current code file, to provide comprehensive and effective guidance on subsequent evolution of the test case set. In this way, the test case set evolution method provided in this application is applicable to a plurality of scenarios in which a test case set needs to be evolved, to effectively improve comprehensiveness of evolution of the test case set.

In a possible implementation, the determining evolution strategy information for the first test case set based on the running description information includes:
determining, based on the code segment that is executed in the running process and that is in the code file, a target code segment that is not executed in the running process and that is in the code file, and determining the target evolution manner indicated by the evolution strategy information, where the target evolution manner indicates to add a test case corresponding to the target code segment.

According to the foregoing technical solution, when the first test case set lacks a test case for effectively testing the added code segment, an evolution manner of the new test case can be determined by generating the evolution strategy information for the target code segment, to efficiently guide evolution of the test case set.

In a possible implementation, the obtaining an evolved second test case set based on the evolution strategy information, the code file, and the first test case set includes:
when the evolution strategy information indicates to add the test case corresponding to the target code segment, obtaining the target code segment from the code file;
obtaining a reusable code element of the first test case set, where the reusable code element is repeatedly used in a plurality of test cases of the first test case set; and
determining a new test case in the second test case set based on the target code segment and the reusable code element, where the new test case is used to test the target code segment.

The reusable code element is reusable for the code file before the change. In this application, the reusable code element is directly obtained, to generate the new test case.

In the foregoing process, considering association between the test case set during evolution and an original test case set, existing code elements are fully used, and code redundancy is avoided. Further, it is ensured that the test case set has a good effect after the test case set is evolved, evolution efficiency of the test case set is greatly improved, and costs of managing and maintaining the test case set are greatly reduced.

In a possible implementation, the determining evolution strategy information for the first test case set based on the running description information includes:
determining, based on the error information and the code file, a code element that is in the code file and that is changed relative to the case location; and
determining, based on the error information and the changed code element, the target evolution manner indicated by the evolution strategy information, where the target evolution manner indicates a manner of repairing the case location based on the changed code element.

The code element in the code file is changed, and consequently, an error occurs in some test cases in the first test case set in a running process. In this case, in this application, a cause of the error is obtained through analysis based on the error information, to determine an evolution strategy for the first test case set. The evolution strategy includes repairing an erroneous test case.

In a possible implementation, when a compilation error occurs in the erroneous test case, the error information indicates a first case location at which the compilation error occurs and a type of the compilation error; and the determining, based on the error information and the code file, a code element that is in the code file and that is changed relative to the case location includes at least one of the following:
when the type of the compilation error indicates an element identifier error, determining, based on the first case location and the code file, an element identifier that is in the code file and that is changed relative to the first case location; and
when the type of the compilation error indicates an element missing error, determining, based on the first case location and the code file, a code element missing at the first case location relative to the code file.

According to the foregoing process, a plurality of compilation errors can be analyzed, so that a plurality of causes of the compilation error can be accurately identified, and the generated evolution strategy information can be used to implement targeted repairing on the compilation error. This helps improve evolution efficiency of the test case set.

In a possible implementation, the obtaining an evolved second test case set based on the evolution strategy information, the code file, and the first test case set includes at least one of the following:
when the type of the compilation error indicates the element identifier error, modifying, in the target evolution manner indicated by the evolution strategy information and based on the element identifier that is in the code file and that is changed relative to the first case location, an element identifier at the first case location at which an error occurs, to obtain a repaired test case in the second test case set; and
when the type of the compilation error indicates the element missing error, adding, in the target evolution manner indicated by the evolution strategy information and based on the code element missing at the first case location relative to the code file, an element corresponding to the missing element at the first case location, to obtain the repaired test case in the second test case set.

According to the foregoing technical solution, a plurality of types of compilation errors are covered, and targeted intelligent repairing can be performed on a test case in which an error occurs. This effectively reduces a code development amount, and improves efficiency of managing and maintaining the test case set.

In a possible implementation, when a running error occurs in the erroneous test case, the error information indicates a second case location at which the running error occurs and a type of the running error; and the determining, based on the error information and the code file, a code element that is in the code file and that is changed relative to the case location includes:
when the type of the running error indicates a running result error, determining, based on the second case location and the code file, a target running result corresponding to the second case location in the code file.

According to the foregoing process, the running error can be analyzed, to accurately identify a cause of the running error, so that the generated evolution strategy information can be used to implement targeted repairing on the running error. This helps improve evolution efficiency of the test case set.

In a possible implementation, the obtaining an evolved second test case set based on the evolution strategy information, the code file, and the first test case set includes:
when the type of the running error indicates the running result error, replacing, in the target evolution manner indicated by the evolution strategy information and based on the target running result in the code file, an expected result that causes the running result error at the second case location, to obtain a repaired test case in the second test case set.

According to the foregoing technical solution, intelligent repairing can be performed on a test case in which a running error occurs. This can effectively reduce a code development amount, and improve efficiency of managing and maintaining the test case set.

In a possible implementation, the method further includes:
in response to a repair viewing operation on the erroneous test case, displaying repair information between the erroneous test case and the repaired test case, where the repaired test case is obtained by repairing the case location based on the changed code element, and the repair information indicates difference information between the erroneous test case and the repaired test case.

In a possible implementation, the obtaining an evolved second test case set based on the evolution strategy information, the code file, and the first test case set includes:
determining, based on the evolution strategy information, the code file, and the first test case set, a repair failure test case obtained due to a failure to repair the erroneous test case in the target evolution manner in the second test case set.

In the foregoing technical solution, a problem existing in an intelligent repairing process is considered, and flexibility of managing and maintaining the test case set is improved.

In a possible implementation, the running description information includes redundant information, the redundant information indicates a redundant test case in the first test case set in the running process, and the method further includes:
displaying a redundant test case list based on the running description information; and
deleting the redundant test case from the first test case set in response to a deletion operation on the redundant test case.

According to this technical solution, a test case that is no longer used in the running process can be accurately deleted. This reduces storage load caused by the redundant test case, and greatly reduces management and maintenance costs caused by manual deletion of the redundant test case.

In this application, for a plurality of abnormal cases caused by a code file change, a plurality of processes of formulating the evolution strategy information are proposed in a targeted manner, to comprehensively cover evolution scenarios in which addition, repair, and deletion are performed on the test case set. This greatly improves efficiency and comprehensiveness of evolving the test case set, and effectively improves efficiency of managing and maintaining the test case set.

According to a second aspect, a test case set evolution apparatus is provided. The apparatus includes a plurality of functional modules, configured to perform corresponding steps in the test case set evolution method provided in the first aspect.

According to a third aspect, a computing device cluster is provided, including at least one computing device, and each computing device includes a processor and a memory. The processor in the at least one computing device is configured to execute instructions stored in the memory in the at least one computing device, to enable the computing device cluster to perform the test case set evolution method provided in the first aspect.

According to a fourth aspect, a computer-readable storage medium is provided, including computer program instructions. When the computer program instructions are executed by a computing device cluster, the computing device cluster performs the test case set evolution method provided in the first aspect.

According to a fifth aspect, a computer program product including instructions is provided. When the instructions included in the computer program product are run by a computing device cluster, the computing device cluster performs the test case set evolution method provided in the first aspect.

### BRIEF DESCRIPTION OF DRAWINGS

FIG. 1 is a diagram of an implementation environment according to an embodiment of this application;
FIG. 2 is a schematic flowchart of a test case set evolution method according to an embodiment of this application;
FIG. 3 is a schematic flowchart of another test case set evolution method according to an embodiment of this application;
FIG. 4 is a schematic flowchart of repairing a test case according to an embodiment of this application;
FIG. 5 is a diagram of an error repairing interface according to an embodiment of this application;
FIG. 6 is a diagram of a redundant test case list according to an embodiment of this application;
FIG. 7 is a schematic flowchart of generating a new test case according to an embodiment of this application;
FIG. 8 is a diagram of a new test case list according to an embodiment of this application;
FIG. 9 is a functional diagram of a test case set evolution tool according to an embodiment of this application;
FIG. 10 is a diagram of a structure of a test case set evolution apparatus according to an embodiment of this application;
FIG. 11 is a diagram of a hardware structure of a computing device according to an embodiment of this application; and
FIG. 12 is a diagram of a computing device cluster according to an embodiment of this application.

### DESCRIPTION OF EMBODIMENTS

To make the objectives, technical solutions, and advantages of this application clearer, the following further describes the implementations of this application in detail with reference to the accompanying drawings.

Before the technical solutions provided in embodiments of this application are described, the following describes key terms in this application.

A unit test (unit test) is a test manner of performing correctness check on a minimum testable unit of software code.

A test case (test case) usually includes a variable value and a corresponding assertion. The variable value is used to be input into a code file of tested software for execution, to determine, based on an execution result and the assertion, whether the software runs correctly. The assertion (assertion) is first-order logic in a program. When the program is executed to a location of an assertion, the corresponding assertion should be true. If the assertion is not true, the program stops the execution and provides error information.

Software evolution (software evolution) is a process of continuously and iteratively maintaining the software code due to increasing requirements, performance improvement, and the like.

The following describes an implementation environment to which the technical solutions provided in embodiments of this application are applied.

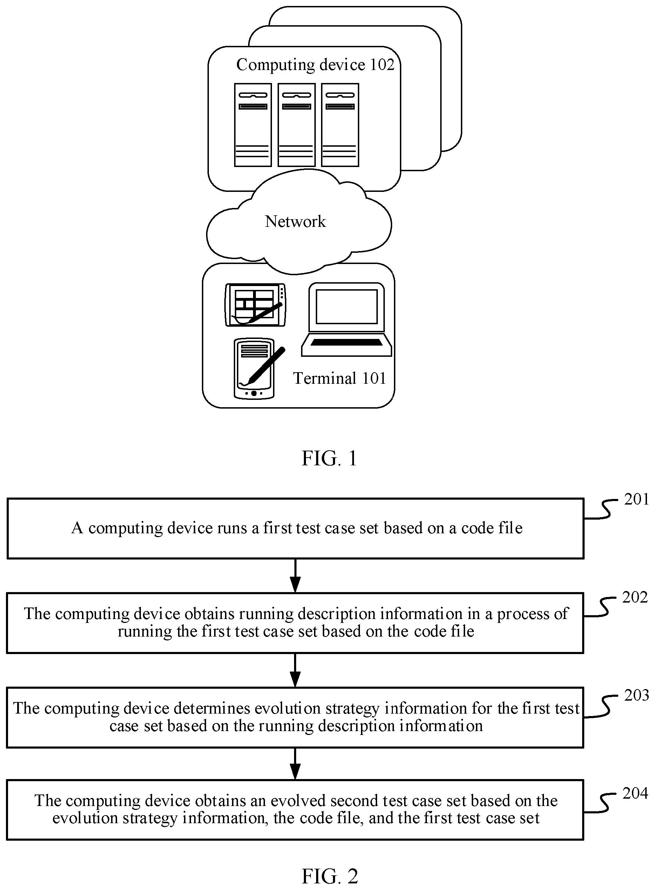

FIG. 1 is a diagram of an implementation environment according to an embodiment of this application. A test case evolution method provided in embodiments of this application can be applied to the implementation environment. Refer to FIG. 1. The implementation environment includes a terminal 101 and at least one computing device 102.

The at least one computing device 102 is also referred to as a computing device cluster, and the at least one computing device 102 provides computing resources and storage resources that are needed for software development. In some embodiments, the at least one computing device 102 provides the computing resources and the storage resources in a form of a development environment. The development environment includes an editing tool, a running environment, and the like for a code file. In some embodiments, the development environment supports a plurality of operations such as reading, writing, compiling, running, debugging, previewing, and testing on a code file of software. This is not limited in this embodiment of this application. In some embodiments, the at least one computing device 102 can obtain a test case set corresponding to the code file, and implement a process of testing the code file by running the test case set based on the code file. In some embodiments, the computing device 102 is a cloud server, and the at least one computing device 102 forms a cloud server cluster, to provide a cloud integrated development environment (cloud integrated development environment, Cloud IDE).

The terminal 101 can obtain the development environment provided by the at least one computing device 102, to provide a software development service. In some embodiments, the terminal is also referred to as an intelligent terminal or a mobile intelligent terminal, and is a type of device that has rich man-machine interaction manners, has an internet access capability, is usually powered by various operating systems, and has a strong processing capability. In some embodiments, a type of the mobile intelligent terminal includes but is not limited to a smartphone, a tablet computer, a vehicle-mounted terminal, a handheld game host, and the like. In some embodiments, the terminal 101 can display, to a user, an interaction interface for using the software development service, to send corresponding instructions to the at least one computing device 102 in response to an operation performed by the user on the interaction interface, so as to obtain a corresponding service provided by the at least one computing device 102.

In this embodiment of this application, the at least one computing device 102 can provide a test case set evolution service based on the development environment. In some embodiments, the terminal 101 obtains the development environment provided by the at least one computing device 102, modifies the code file of the software based on the development environment, and implements evolution of the test case set for the modified code file by using the test case set evolution service provided by the at least one computing device 102. In some embodiments, any computing device 102 provides the test case set evolution service by performing the test case set evolution method provided in this application. For example, for the modified code file, the computing device 102 obtains a first test case set used to test the code file before the modification, determines evolution strategy information for the modified code file based on running description information generated in a process of running, based on the modified code file, the first test case set, and then evolves the first test case set based on guidance of the evolution strategy information, to obtain an evolved second test case set. According to the technical solution, targeted evolution strategy information can be determined based on the running description information generated in the process of testing the code file based on the first test case set, to provide guidance on an evolution process of the test case set. In this way, efficiency of evolving the test case set is improved, and efficiency of managing and maintaining the test case set is improved.

The at least one computing device 102 is in communication connection with the terminal 101 through a wired network or a wireless network. In some embodiments, the wireless network or the wired network uses a standard communication technology and/or protocol. A network is usually the internet, but may alternatively be any network, including but not limited to any combination of a local area network (local area network, LAN), a metropolitan area network (metropolitan area network, MAN), a wide area network (wide area network, WAN), a mobile network, a wired network, a wireless network, a private network, or a virtual private network. In some embodiments, peer-to-peer (peer-to-peer, P2P) communication is implemented between the at least one computing device 102 and the terminal 101 according to a remote procedure call protocol (remote procedure call protocol, RPC). In some embodiments, technologies and/or formats including a hypertext markup language (hypertext markup language, HTML), an extensible markup language (extensible markup language, XML), and the like are used between the at least one computing device 102 and the terminal 101 to represent data exchanged through a network. In addition, all or some links can be encrypted by using conventional encryption technologies such as a secure socket layer (secure socket layer, SSL), transport layer security (transport layer security, TLS), a virtual private network (virtual private network, VPN), and internet protocol security (internet protocol security, IPsec). In some other embodiments, customized and/or dedicated data communication technologies can be further used to replace or supplement the foregoing data communication technologies.

Next, based on the foregoing implementation environment, the test case set evolution method provided in embodiments of this application is described. FIG. 2 is a schematic flowchart of a test case set evolution method according to an embodiment of this application. The method can be applied to the foregoing implementation environment, and is performed by at least one computing device in a computer device cluster. The method includes the following step 201 to step 204.

201: The computing device runs a first test case set based on a code file.

The code file includes source code for implementing a software function. In some embodiments, a software developer can modify the code file, to implement objectives such as function addition, error repairing, and performance optimization.

In this embodiment of this application, the first test case set is used to test whether a process of running the code file meets an expectation. In some embodiments, a test case may include a test input, a preset condition, and an expected result. In this example, a process of running the first test case set based on the code file may include: when a current running environment meets the preset condition, using the test input of the test case as an input of the code file, to execute the code file.

In some embodiments, the first test case set is used to perform a unit test on the code file. The unit test is a test manner of performing correctness check on a minimum testable unit of code. In some embodiments, a unit of the code file may be determined based on a programming language used by the code file. For example, a unit in the C language is a function (function), and a unit in the Java language is a method (method). This is not limited in this application. For example, the code file corresponds to a class (class) A. In this case, a plurality of test cases B1, B2, and B3 in a first test case set B are respectively used to test a plurality of methods A1, A2, and A3 included in the class A.

In some embodiments, when the code file is changed, a process of running the first test case set based on the changed code file is a process of testing the changed code file by using the first test case set, and an abnormal case may occur. In this embodiment of this application, the first test case set is run based on the changed code file, to start an evolution procedure for the first test case set.

202: The computing device obtains running description information in a process of running the first test case set based on the code file.

In this embodiment of this application, the running description information is used to record the process of running the first test case set. In other words, the running description information is test record information.

In some embodiments, a change of the code file includes a plurality of cases, for example, adding a method to a class, deleting a method from a class, or modifying a definition of a method in a class. In view of this, this application provides a plurality of manners, so that the computing device can obtain corresponding running description information for a plurality of scenarios, to provide comprehensive guidance on an evolution process of the test case set. A manner of obtaining the running description information provided in this application includes the following Manner 1, Manner 2, and Manner 3.

Manner 1: The computing device determines a code segment that is executed in the running process and that is in the code file.

In some embodiments, a code segment is added to the code file relative to a version targeted by the first test case set. In some embodiments, the added code segment is in an existing unit. For example, one method is added to an existing class in the code file. In some other embodiments, the added code segment corresponds to one new unit. For example, one class is added to the code file. A granularity of the added code segment in the code file is not limited in this application.

In some embodiments, the computing device determines the executed code segment by analyzing test coverage information generated in the running process. In some embodiments, the test coverage information may include a tested condition in the code file. A larger quantity of tested conditions indicates a higher degree of covering, by a current test, statements pointed to by different determining conditions in the code file. The tested condition in the test coverage information is analyzed, so that a code segment that is pointed to by the condition and that is not executed can be determined in a targeted manner. The foregoing process describes, based on a status of condition coverage, a process of analyzing the test coverage information. In some other embodiments, the test coverage information may include a plurality of indicators such as path coverage, function coverage, and branch coverage. This is not limited in this application.

In the foregoing process, corresponding running description information can be obtained based on a status of the code segment added to the code file, to provide effective guidance information on a subsequent evolution process, and ensure that the test case set evolution method provided in this application can accurately identify a code addition scenario.

Manner 2: The computing device determines error information in the running description information based on an erroneous test case in which an error occurs in the running process, where the error information indicates a case location at which an error occurs in the erroneous test case and a type of the error.

In some embodiments, a code element in the code file is changed relative to a version targeted by the first test case set. The code element is a basic element of code, for example, a constant, a variable, a method, and a method parameter.

In some embodiments, a case location indicated by the error information is a statement location at which an error occurs in the erroneous test case, for example, a code line number of an error. In some other embodiments, the error information further includes a number and a title of the erroneous test case. This is not limited in this application.

In some embodiments, if the code element is changed, an error is reported in some test cases in the first test case set due to an error in the running process. Based on this, the computing device can determine, by analyzing the obtained error information, a cause of the error in the erroneous test case.

The following describes a plurality of types of errors in this application.

In some embodiments, based on phases in which errors occur, the types of the errors are classified into a compilation error and a running error.

In some embodiments, the compilation error occurs in a phase of translating source code in the code file into an executable program. For example, the code element is usually indicated by an element identifier (for example, an identifier). When the element identifier of the code element changes, and when the test case references the code element based on the element identifier before the change, the compilation error occurs because an element identifier used in a statement is incorrect. For example, when a quantity of code elements changes, for example, a parameter X is added to a method A1 of a class A, and when the test case invokes the changed code element to perform parameter declaration, the compilation error occurs because a parameter defined in the statement is inconsistent with the changed code element.

In some embodiments, the running error occurs in a phase in which the executable program is loaded into a memory for execution to obtain a running result. For example, when the executable program is executed to a location of an assertion in the test case, because a running result of the changed code file is inconsistent with an expected result of the first test case set, that is, the assertion is not true, the program is stopped, and the running error occurs.

In the foregoing process, the error information can be obtained when the code element in the code file changes, so that the test case set evolution method provided in this application can accurately identify a plurality of types of errors that occur in different scenarios, to provide effective guidance for a subsequent evolution process.

Manner 3: The computing device obtains redundant information included in the running description information, where the redundant information indicates a redundant test case in the first test case set in the running process.

A code segment covered by the redundant test case can be covered by a test case set obtained by removing the redundant test case from the first test case set. Therefore, deleting the redundant test case from the first test case set does not affect a test effect of the first test case set on the code file.

In some embodiments, when a code segment is added to the code file relative to a version targeted by the first test case set, and a code element in the code file changes, that is, cases targeted by Manner 1 and Manner 2 occur. In addition, branch logic in the code may be changed, resulting in test case redundancy. Based on this, the computing device can accurately identify, by obtaining the redundant information included in the running description information, a test case that is no longer used in the running process due to the change of the branch logic in the code, to greatly reduce management and maintenance costs caused by manual identification of the redundant test case.

In some embodiments, based on an actual status of the running process, the running description information can be obtained in at least one of Manner 1, Manner 2, and Manner 3. In some other embodiments, the running description information is obtained based on at least Manner 1 and Manner 2. This is not limited in this application.

In this embodiment of this application, the running description information can be used to analyze an abnormal case that occurs in a process in which the first test case set tests the current code file, to provide comprehensive and effective guidance on subsequent evolution of the test case set. In this way, the test case set evolution method provided in this application is applicable to a plurality of scenarios in which a test case set needs to be evolved, to effectively improve comprehensiveness of the evolution of the test case set.

203: The computing device determines evolution strategy information for the first test case set based on the running description information, where the evolution strategy information indicates a target evolution manner of the first test case set.

In this embodiment of this application, the computing device can obtain through analysis, based on the running description information, the abnormal case that occurs in the process in which the first test case set tests the current code file, to accurately determine, for a plurality of abnormal cases, the evolution strategy information that can provide guidance on an evolution manner of the test case set.

The evolution strategy information is guidance information including a plurality of evolution strategies. For the running description information obtained in the plurality of scenarios, the evolution strategies include a plurality of cases. That is, there are a plurality of target evolution manners indicated by the evolution strategy information. Next, for the running description information obtained in the plurality of scenarios, the following Case 1, Case 2, and Case 3 are used as examples, to describe a process of determining the evolution strategy information.

Case 1: The evolution strategy includes adding a test case.

In some embodiments, the code segment is added to the code file relative to the version targeted by the first test case set. For details, refer to Manner 1 in which the running description information is obtained. In this case, an evolution strategy for the first test case set includes adding a test case.

In some embodiments, the computing device can determine, based on the code segment that is executed in the running process and that is in the code file, a target code segment that is not executed in the running process and that is in the code file, and determine the target evolution manner indicated by the evolution strategy information, where the target evolution manner indicates to add a test case corresponding to the target code segment.

According to the foregoing technical solution, when the first test case set lacks a test case for effectively testing the added code segment, an evolution manner of the new test case can be determined by generating the evolution strategy information for the target code segment, to efficiently guide evolution of the test case set.

Case 2: The evolution strategy includes repairing a test case.

In some embodiments, the code element in the code file is changed relative to the version targeted by the first test case set, and consequently, an error occurs in some test cases in the first test case set in the running process (refer to Manner 2 in which the running description information is obtained). In this case, the computing device can obtain a cause of the error through analysis based on the error information, to determine an evolution strategy for the first test case set. The evolution strategy includes repairing the erroneous test case.

In some embodiments, the computing device determines, based on the error information and the code file, a code element that is in the code file and that is changed relative to the case location, and further determines, based on the error information and the changed code element, the target evolution manner indicated by the evolution strategy information, where the target evolution manner indicates a manner of repairing the case location based on the changed code element. In this embodiment of this application, different types of errors can be used to obtain different error causes through analysis, to determine evolution strategies for the different error causes. Next, for different types of errors that occur in the erroneous test case, a principle of determining the target evolution manner is described. Refer to the following Case 2-1 and Case 2-2.

Case 2-1: The compilation error occurs in the erroneous test case.

In some embodiments, when the compilation error occurs in the erroneous test case, the error information indicates a first case location at which the compilation error occurs and a type of the compilation error. For descriptions of the compilation error, refer to step 202. Details are not described herein again. The following separately describes compilation errors of a plurality of types.

Compilation error type 1: An element identifier error. When the type of the compilation error indicates the element identifier error, the computing device determines, based on the first case location and the code file, an element identifier that is in the code file and that is changed relative to the first case location. For example, the first case location indicates that a statement of an element identifier M is referenced in the erroneous test case. Because the element identifier M is changed to K in a change process of the code file, the compilation error occurs when M is used in the erroneous test case. Based on this, the computing device obtains, from the code file, the element identifier K that is changed relative to the first case location, to determine a manner of repairing the first case location based on the changed element identifier.

Compilation error type 2: An element missing error. When the type of the compilation error indicates an element missing error, a code element missing at the first case location relative to the code file is determined based on the first case location and the code file. For example, the first case location indicates that a statement of a code element N is referenced in the erroneous test case. Because an element P is added to the code element N in a change process of the code file, when the erroneous test case performs parameter declaration to invoke the code element N, the compilation error occurs because a parameter defined in the statement does not include the element P. Based on this, the computing device determines, from the code file, the code element missing at the first case location relative to the code file, to determine a manner of repairing the first case location based on the missing code element.

According to the foregoing process, a plurality of compilation errors can be analyzed, so that a plurality of causes of the compilation error can be accurately identified, and the generated evolution strategy information can be used to implement targeted repairing on the compilation error. This helps improve evolution efficiency of the test case set.

Case 2-2: The running error occurs in the erroneous test case.

In some embodiments, when the running error occurs in the erroneous test case, the error information indicates a second case location at which the running error occurs and a type of the running error. For descriptions of the running error, refer to step 202. Details are not described herein again.

In some embodiments, when the type of the running error indicates a running result error, the computing device determines, based on the second case location and the code file, a target running result corresponding to the second case location in the code file. For example, the second case location indicates an assertion statement that is in the erroneous test case and that is used to determine the running result of the code file. Because the code file is changed, when the erroneous test case is executed to the assertion statement (namely, the second case location), the running result error is caused because the running result of the code file after the change is inconsistent with the expected result, that is, the assertion is not true. Based on this, the computing device determines a target running result corresponding to the second case location in the code file, to determine a manner of repairing the second case location based on the target running result.

According to the foregoing process, the running error can be analyzed, to accurately identify a cause of the running error, so that the generated evolution strategy information can be used to implement targeted repairing on the running error. This helps improve evolution efficiency of the test case set.

Case 3: The evolution strategy includes deleting a test case.

In some embodiments, a change of the code file causes a change of branch logic in the code, and causes test case redundancy (refer to Manner 3 of obtaining the running description information). In this case, the evolution strategy for the first test case set includes deleting a redundant test case.

Case 1, Case 2, and Case 3 respectively provide processes of determining the evolution strategy information based on the running description information obtained in different scenarios. Based on the manner of obtaining the running description information in this embodiment, Case 1, Case 2, and Case 3 may occur. This is not limited in this application.

In this application, for a plurality of abnormal cases caused by a code file change, a plurality of processes of formulating the evolution strategy information are proposed in a targeted manner, to comprehensively cover evolution scenarios in which addition, repair, and deletion are performed on the test case set. This greatly improves efficiency and comprehensiveness of evolving the test case set, and effectively improves efficiency of managing and maintaining the test case set.

204: The computing device obtains an evolved second test case set based on the evolution strategy information, the code file, and the first test case set.

In this embodiment of this application, the computing device evolves the first test case set based on guidance of the evolution strategy information by using the code file as a test object, to obtain the second test case set. For a plurality of target evolution manners indicated by the evolution strategy information, namely, evolution strategies in a plurality of cases, the following Evolution manner 1, Evolution manner 2, and Evolution manner 3 are used as examples, to describe a process of evolving the first test case set.

Evolution manner 1: The evolution strategy includes adding a test case, that is, the evolution strategy information indicates to add a test case corresponding to the target code segment.

In this case, the computing device obtains the target code segment from the code file, and obtains a reusable code element in the first test case set, to determine a new test case in the second test case set based on the target code segment and the reusable code element, where the new test case is used to test the target code segment.

The reusable code element is repeatedly used in a plurality of test cases of the first test case set. For example, the reusable code element is a global member variable in the first test case set, and the global member variable may be directly invoked in each of the plurality of test cases in the first test case set.

In some embodiments, when the code file before the change is tested, the plurality of test cases in the first test case set can directly use the reusable code element without repeated definition. Based on this, considering that the reusable code element is reusable for the code file before the change, in this application, the reusable code element is directly obtained, to generate the new test case.

In some embodiments, the first test case is used to perform a unit test on the code file before the change, and the target code segment is added to an existing unit of the code file. For example, the target code segment defines a new method in an existing class of the code file. In this example, the computing device can obtain a reusable element in a test case used to test the unit, to determine the new test case for the target code segment in the second test case set.

In the related art, a new test case set is fully generated for the changed code file, and an existing test case set is not reused. Consequently, generation efficiency of the test case set is greatly affected. Further, a new test case further increases workload of managing and maintaining the test case set by a developer.

According to the technical solution provided in this application, considering association between the test case set during evolution and an original test case set, existing code elements are fully reused, and code redundancy is avoided. Further, it is ensured that the test case set has a good effect after the test case set is evolved, evolution efficiency of the test case set is greatly improved, and costs of managing and maintaining the test case set are greatly reduced.

Evolution manner 2: The evolution strategy includes repairing the test case, that is, the evolution strategy information indicates to repair the erroneous test case.

Next, for different types of errors that occur in the erroneous test case, a process of repairing the erroneous test case is described. Refer to the following Evolution manner 2-1 and Evolution manner 2-2.

Evolution manner 2-1: The compilation error occurs in the erroneous test case.

In some embodiments, when the type of the compilation error indicates the element identifier error, the computing device modifies, in the target evolution manner indicated by the evolution strategy information and based on the element identifier that is in the code file and that is changed relative to the first case location, an element identifier at the first case location at which an error occurs, to obtain a repaired test case in the second test case set. For example, the element identifier is a method name, and the computing device renames, based on a method name that is in the code file and that is changed relative to the first case location, a method name in which an error occurs at the first case location, to obtain a repaired test case in which the element identifier error is repaired.

In some embodiments, when the type of the compilation error indicates the element missing error, the computing device adds, in the target evolution manner indicated by the evolution strategy information and based on the code element missing at the first case location relative to the code file, an element corresponding to the missing element at the first case location, to obtain the repaired test case in the second test case set. For example, the missing code element is a method parameter, and the computing device performs, based on a method parameter that is in the code file and that is added relative to the first case location, method declaration on the first case location at which an error occurs due to the missing method parameter, to generate a method signature including the missing method parameter, and obtain the repaired test case in which the element missing error is repaired.

According to the foregoing technical solution, a plurality of types of compilation errors are covered, and targeted intelligent repairing can be performed on a test case in which an error occurs. This effectively reduces a code development amount, and improves efficiency of managing and maintaining the test case set.

Evolution manner 2-2: The running error occurs in the erroneous test case.

In some embodiments, when the type of the running error indicates the running result error, the computing device replaces, in the target evolution manner indicated by the evolution strategy information and based on the target running result in the code file, an expected result that causes the running result error at the second case location, to obtain a repaired test case in the second test case set. For example, when the erroneous test case is executed to the second case location, the running result error is caused because the current running result is inconsistent with the expected result due to a change of the code file. The computing device replaces, based on the target running result corresponding to the second case location in the code file, the expected result that causes the error. That is, the expected result that no longer functions as an effective assertion is obtained, and a repaired test case in which the running result error is repaired is obtained. The target running result is an actual running result of the changed code file, and the actual running result can be used as a correct expected result to repair an invalid assertion in the test case. In some embodiments, the computing device obtains the actual running result by reading an assertion record corresponding to the erroneous test case.

According to the foregoing technical solution, intelligent repairing can be performed on a test case in which a running error occurs. This can effectively reduce a code development amount, and improve efficiency of managing and maintaining the test case set.

In some other embodiments, in a process of repairing the erroneous test case in Evolution manner 2, there may also be a test case that fails to be repaired. In this case, the computing device can determine, based on the evolution strategy information, the code file, and the first test case set, a repair failure test case obtained due to a failure to repair the erroneous test case in the target evolution manner in the second test case set. For example, the computing device can compile and run the repaired erroneous test case, to determine a test case in which an abnormal case still exists after repairing is performed.

In some embodiments, the computing device can add a failure identifier to the repair failure test case, to indicate that the test case fails to be repaired in the foregoing repairing manner. In some embodiments, the computing device provides an editing interface for the repair failure test case, so that a developer can manually repair the repair failure test case. In the foregoing technical solution, a problem existing in an intelligent repairing process is considered, and flexibility of managing and maintaining the test case set is improved.

In some other embodiments, after the computing device obtains the repaired test case in Evolution manner 2, the computing device can further display repair information between the erroneous test case and the repaired test case in response to a repair viewing operation on the erroneous test case. The repair information indicates difference information between the erroneous test case and the repaired test case. The repaired test case is also obtained by repairing, in the foregoing plurality of evolution manners, the changed code element and an incorrect case location.

In some embodiments, the difference information indicated by the repair information is stored in a form of a differential data file (diff). The diff file is obtained by performing a difference operation on two data sets. In some other embodiments, the computing device can indicate, in a form of the diff file, a repairing manner for the erroneous test case, to generate a patch file for the first test case set based on the diff file, and further generate the repaired test case in the second test case set based on the patch file and the first test case set in response to a repair confirmation operation on the erroneous test case set.

Evolution manner 3: The evolution strategy includes deleting the test case, that is, the evolution strategy information indicates to delete the redundant test case.

In some other embodiments, the computing device can display a redundant test case list based on the running description information, to delete the redundant test case from the first test case set in response to a deletion operation on the redundant test case. Based on this, a test case that is no longer used in the running process can be accurately deleted. This reduces storage load caused by the redundant test case, and greatly reduces management and maintenance costs caused by manual deletion of the redundant test case.

According to the technical solution, targeted evolution strategy information can be determined based on the running description information generated in the process of testing the code file based on the first test case set, to provide guidance on an evolution process of the test case set. In this way, efficiency of evolving the test case set is improved, and efficiency of managing and maintaining the test case set is improved.

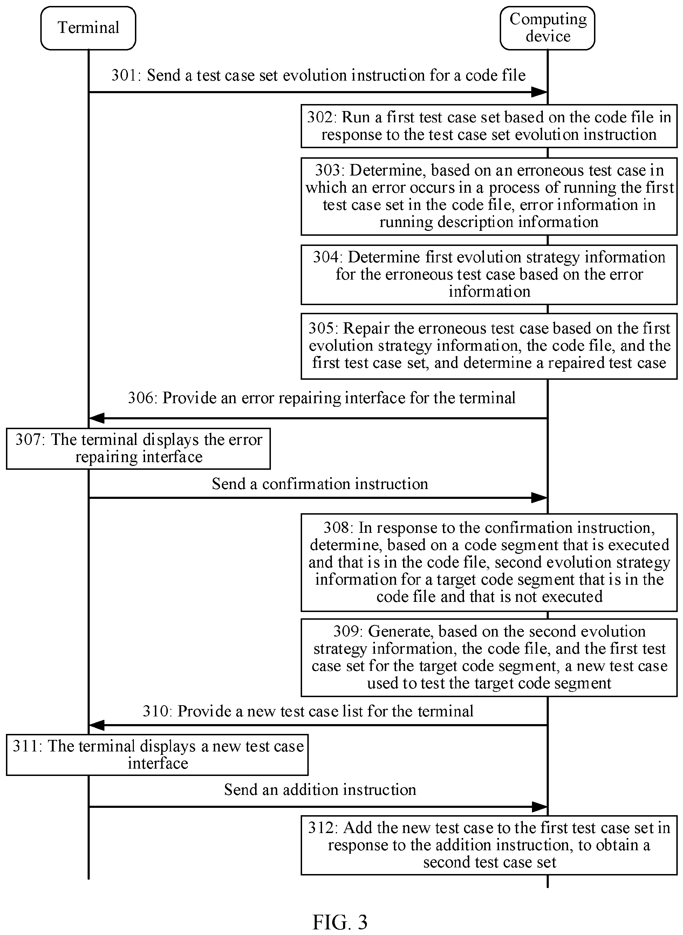

The foregoing embodiment describes a principle of a process in which the computing device performs the test case set evolution method. The following further describes in detail, based on an interaction process between the computing device and a terminal, an implementation process of the test case set evolution method provided in this application. FIG. 3 is a schematic flowchart of a test case set evolution method according to an embodiment of this application. The method can be applied to the foregoing implementation environment. The method includes the following step 301 to step 312.

301: A terminal sends a test case set evolution instruction for a code file to a computing device.

In some embodiments, a developer performs software development based on the terminal. When the developer selects software on which a test case set is to be evolved, the terminal sends a test case set evolution instruction of a code file of the software to the computing device, to initiate an evolution procedure of a first test case set for the code file. For descriptions of the code file and the first test case set, refer to step 201. Details are not described herein again.

302: The computing device runs the first test case set based on the code file in response to the test case set evolution instruction.

Step 302 is similar to step 201, and details are not described herein again.

303: The computing device determines, based on an erroneous test case in which an error occurs in a process of running the first test case set in the code file, error information in running description information, where the error information indicates a case location at which an error occurs in the erroneous test case and a type of the error.

Step 303 is similar to Manner 2 in step 202, and details are not described herein again.

304: The computing device determines first evolution strategy information for the erroneous test case based on the error information, where the first evolution strategy information indicates a target evolution manner used to repair the erroneous test case.

Step 304 is similar to Case 2 in step 203, and details are not described herein again. Step 304 is used to determine, in a process of determining an evolution strategy of the first test case set, a manner of repairing the erroneous test case in which an error occurs.

305: The computing device repairs the erroneous test case based on the first evolution strategy information, the code file, and the first test case set, and determines a repaired test case.

The evolution strategy information indicates to repair the erroneous test case.

Step 305 is similar to Evolution manner 2 in step 203, and details are not described herein again.

In some other embodiments, in a process of repairing the erroneous test case in Evolution manner 2, there may also be a test case that fails to be repaired. In this case, the computing device can determine, based on the evolution strategy information, the code file, and the first test case set, a repair failure test case obtained due to a failure to repair the erroneous test case in a target evolution manner in a second test case set. For example, the computing device can compile and run the repaired erroneous test case, to determine a test case in which an abnormal case still exists after repairing is performed.

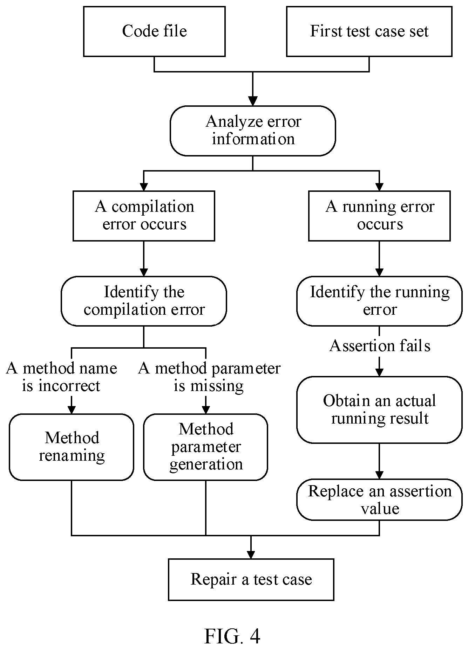

To facilitate understanding of a process of repairing the erroneous test case to obtain the repaired test case, this application provides a schematic flowchart of repairing a test case. Refer to FIG. 4. The first test case set is first run based on the code file, and the error information is analyzed for the erroneous test case in which the error occurs, to determine a corresponding evolution strategy, so as to obtain the repaired test case in a repairing manner indicated by the evolution strategy. As shown in FIG. 4, for the erroneous test case in which a compilation error occurs, when a method name is incorrect, the repairing manner is method renaming. When a method parameter is missing, the repairing manner is method parameter generation. For the erroneous test case in which a running error occurs, when the type of the error is an assertion failure, the repairing manner is assertion repair. An assertion repairing process includes executing a test case to obtain an actual running result, to replace the actual running result with an assertion value.

306: The computing device provides an error repairing interface for the terminal, where the error repairing interface is configured to query whether to accept repairing an erroneous test case targeted by the error repairing interface in a repairing manner of the repaired test case.

In some other embodiments, the error repairing interface is further configured to view repair information between the erroneous test case and the repaired test case. The repair information indicates difference information between the erroneous test case and the repaired test case. For the repair information in step 306, refer to the descriptions in Evolution manner 2 in step 203. Details are not described herein again.

307: The terminal displays the error repairing interface, and sends a confirmation instruction to the computing device in response to a repair confirmation operation on the repaired test case, where the confirmation instruction is used to trigger a procedure of adding a test case.

In some embodiments, in response to a repair viewing operation on the erroneous test case, repair information between the erroneous test case and the repaired test case is displayed. In some embodiments, the repair viewing operation may be a trigger operation on a viewing button on the error repairing interface.

In some embodiments, the error repairing interface can separately display a corresponding repaired test case and a corresponding repair failure test case for the erroneous test case in which the compilation error and the running error occur. In some other embodiments, the error repairing interface can be further configured to view a correct test case in which no error occurs. This is not limited in this application.

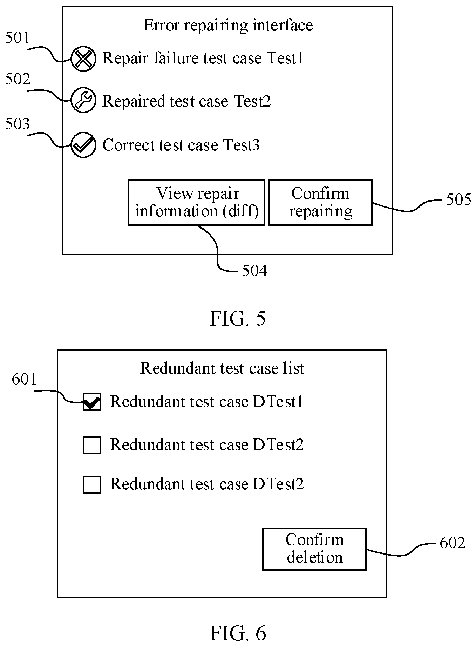

This application provides a diagram of an error repairing interface. Refer to FIG. 5. When the error repairing interface is for the compilation error, a button 501 is configured to edit a repair failure test case Test1 in which the compilation error occurs and repair fails; a button 502 is configured to view a repaired test case Test2 in which the compilation error occurs but repair succeeds; a button 503 is configured to view a correct test case Test3 in which no compilation error occurs; a button 504 is configured to view repair information (diff) between the repaired test case Test2 and an erroneous test case targeted by the repaired test case Test2; and a button 505 is configured to accept repairing, in a repairing manner of the repaired test case Test2, the erroneous test case targeted by the repaired test case Test2, and trigger a confirmation instruction.

In some other embodiments, after performing step 302, the computing device may further obtain redundant information included in the running description information, to provide a redundant test case list for the terminal based on the redundant information included in the running description information. The redundant information indicates a redundant test case in the first test case set in the running process. This process is similar to Manner 3 and Case 3 in step 202, and details are not described herein again. In some other embodiments, a target evolution manner of deleting the redundant test case is indicated.

In some embodiments, the terminal displays the redundant test case list, and sends a deletion instruction to the computing device in response to a deletion operation on the redundant test case, where the deletion instruction instructs to delete the redundant test case from the first test case set.

This application provides a diagram of a redundant test case list. Refer to FIG. 6. When a check box 601 corresponding to a redundant test case DTest1 is selected, the terminal can send a deletion instruction for the redundant test case DTest1 to the computing device in response to a trigger operation on a delete confirmation button 602.

308: In response to the confirmation instruction, the computing device determines, based on the code segment that is executed and that is in the code file, second evolution strategy information for a target code segment that is in the code file and that is not executed, where the second evolution strategy information indicates a target evolution manner used to add a test case corresponding to the target code segment.

Step 308 is similar to Manner 1 in step 202 and Case 1 in step 203, and details are not described herein again.

In some embodiments, in response to the confirmation instruction, the computing device performs, based on the first test case set obtained by repairing the erroneous test case, deleting the redundant test case, and editing the repair failure test case, a process of generating a new test case that is performed in this step and a subsequent step.

309: The computing device generates, based on the second evolution strategy information, the code file, and the first test case set for the target code segment, a new test case used to test the target code segment.

Step 309 is similar to Evolution manner 1 in step 204, and details are not described herein again.

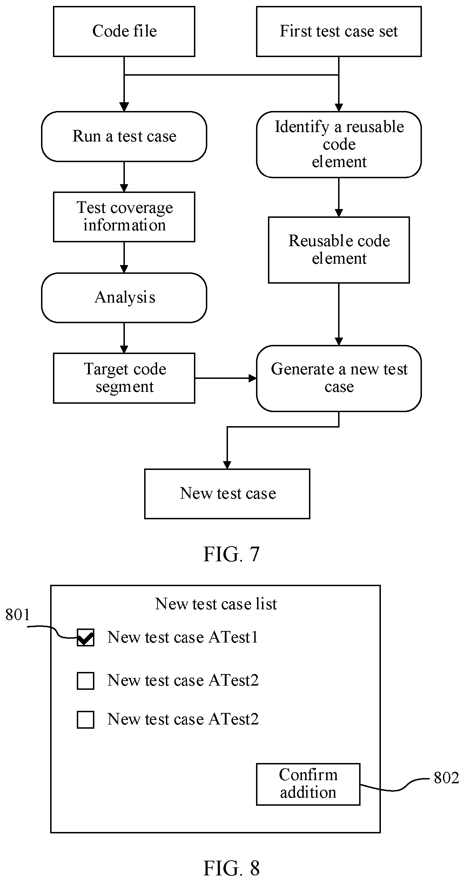

To facilitate understanding of a process of generating the new test case, this application provides a schematic flowchart of generating a new test case. Refer to FIG. 7. The computing device runs the first test case set based on the code file, to obtain test coverage information, and determines an uncovered target code segment by analyzing the test coverage information. Reusable code element identification is performed on the first test case set, to obtain the reusable code element, so that the new test case for the target code segment is generated based on the reusable code element and the target code segment.

310: The computing device provides the new test case list for the terminal, where the new test case list is used to trigger an addition instruction, and the addition instruction instructs to add the new test case to the first test case set.

311: The terminal displays the new test case list, and sends an addition instruction to the computing device in response to an addition confirmation operation on the new test case.

This application provides a diagram of a new test case list. Refer to FIG. 8. When a check box 801 corresponding to a new test case ATest1 is selected, the terminal can send, to the computing device, the added instruction for the new test case ATest1 in response to a trigger operation on an addition confirmation button 802.

312: The computing device adds the new test case to the first test case set in response to the addition instruction, to obtain the second test case set.

In some embodiments, in response to the addition instruction triggered based on the new test case list, the computing device adds the new test case to the first test case set obtained by repairing the erroneous test case, deleting the redundant test case, and editing the repair failure test case, to obtain the evolved first test case, namely, the second test case set.

According to the technical solution, targeted evolution strategy information can be determined based on running description information generated in a process of testing the code file based on the first test case set, to provide guidance on an evolution process of the test case set. In this way, efficiency of evolving the test case set is improved, and efficiency of managing and maintaining the test case set is improved. Further, a convenient interactive interface is provided for a developer, which covers a plurality of scenarios of test case set evolution. An interactive full-procedure test case evolution solution is provided. An evolution procedure is clear, intuitive, and easy to operate, and can help the developer efficiently evolve the test case set. This greatly improves efficiency of managing and maintaining the test case set.

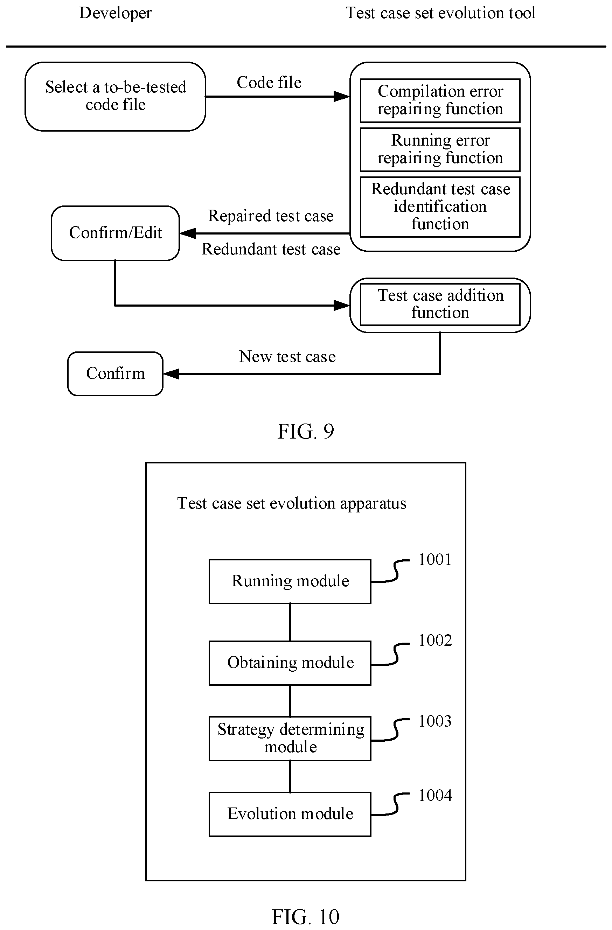

In some embodiments, the test case set evolution method provided in this embodiment of this application can be implemented as a test case set evolution tool in a software integrated development environment. The developer can implement the process described in step 301 to step 312 by using the test case set evolution tool. This application provides a functional diagram of a test case set evolution tool. Refer to FIG. 9. A developer selects a code file on which test case set evolution is to be performed, based on the foregoing technical solution, the test case set evolution tool provides a compilation error repairing function, a running error repairing function, and a redundant test case identification function. A repaired test case and a redundant test case are presented to the developer. After the developer confirms the repaired test case or edits a repair failure test case, a test case addition function of the test case set evolution tool is triggered. After the test case set evolution tool determines a new test case based on the technical solution described above, the new test case is presented to the developer, and an evolution process is completed in response to a confirmation operation on the new test case.

FIG. 10 is a diagram of a structure of a test case set evolution apparatus according to an embodiment of this application. Refer to FIG. 10. The test case set evolution apparatus includes:
a running module 1001, configured to run a first test case set based on a code file;
an obtaining module 1002, configured to obtain running description information in a process of running the first test case set based on the code file;
a strategy determining module 1003, configured to determine evolution strategy information for the first test case set based on the running description information, where the evolution strategy information indicates a target evolution manner of the first test case set; and
an evolution module 1004, configured to obtain an evolved second test case set based on the evolution strategy information, the code file, and the first test case set.

In a possible implementation, the obtaining module 1002 is configured to perform at least one of the following:
determining a code segment that is executed in the running process and that is in the code file; and
determining error information in the running description information based on an erroneous test case in which an error occurs in the running process, where the error information indicates a case location at which an error occurs in the erroneous test case and a type of the error.

In a possible implementation, the strategy determining module 1003 is configured to:
determine, based on the code segment that is executed in the running process and that is in the code file, a target code segment that is not executed in the running process and that is in the code file, and determine the target evolution manner indicated by the evolution strategy information, where the target evolution manner indicates to add a test case corresponding to the target code segment.

In a possible implementation, the evolution module 1004 is configured to:
when the evolution strategy information indicates to add the test case corresponding to the target code segment, obtain the target code segment from the code file;
obtain a reusable code element of the first test case set, where the reusable code element is repeatedly used in a plurality of test cases of the first test case set; and
determine a new test case in the second test case set based on the target code segment and the reusable code element, where the new test case is used to test the target code segment.

In a possible implementation, the strategy determining module 1003 includes:
an element determining unit, configured to determine, based on the error information and the code file, a code element that is in the code file and that is changed relative to the case location; and
a strategy determining unit, configured to determine, based on the error information and the changed code element, the target evolution manner indicated by the evolution strategy information, where the target evolution manner indicates a manner of repairing the case location based on the changed code element.

In a possible implementation, when a compilation error occurs in the erroneous test case, the error information indicates a first case location at which the compilation error occurs and a type of the compilation error; and
the element determining unit is configured to perform at least one of the following:
when the type of the compilation error indicates an element identifier error, determining, based on the first case location and the code file, an element identifier that is in the code file and that is changed relative to the first case location; and
when the type of the compilation error indicates an element missing error, determining, based on the first case location and the code file, a code element missing at the first case location relative to the code file.

In a possible implementation, the evolution module 1004 is configured to perform at least one of the following:
when the type of the compilation error indicates the element identifier error, modifying, in the target evolution manner indicated by the evolution strategy information and based on the element identifier that is in the code file and that is changed relative to the first case location, an element identifier at the first case location at which an error occurs, to obtain a repaired test case in the second test case set; and
when the type of the compilation error indicates the element missing error, adding, in the target evolution manner indicated by the evolution strategy information and based on the code element missing at the first case location relative to the code file, an element corresponding to the missing element at the first case location, to obtain the repaired test case in the second test case set.

In a possible implementation, when a running error occurs in the erroneous test case, the error information indicates a second case location at which the running error occurs and a type of the running error; and
the element determining unit is configured to:
when the type of the running error indicates a running result error, determine, based on the second case location and the code file, a target running result corresponding to the second case location in the code file.

In a possible implementation, the evolution module 1004 is configured to:
when the type of the running error indicates the running result error, replace, in the target evolution manner indicated by the evolution strategy information and based on the target running result in the code file, an expected result that causes the running result error at the second case location, to obtain a repaired test case in the second test case set.

In a possible implementation, the apparatus further includes:
a repair display module, configured to: in response to a repair viewing operation on the erroneous test case, display repair information between the erroneous test case and the repaired test case, where the repaired test case is obtained by repairing the case location based on the changed code element, and the repair information indicates difference information between the erroneous test case and the repaired test case.

In a possible implementation, the evolution module 1004 is configured to:
determine, based on the evolution strategy information, the code file, and the first test case set, a repair failure test case obtained due to a failure to repair the erroneous test case in the target evolution manner in the second test case set.

In a possible implementation, the running description information includes redundant information, the redundant information indicates a redundant test case in the first test case set in the running process, and the apparatus further includes:
a redundancy display module, configured to display a redundant test case list based on the running description information; and
a deletion module, configured to delete the redundant test case from the first test case set in response to a deletion operation on the redundant test case.

The running module, the obtaining module, the strategy determining, and the evolution module may be implemented by using software, or may be implemented by using hardware. For example, an implementation of the running module is described below by using the running module as an example. Similarly, for implementations of the obtaining module, the strategy determining module, and the evolution module, refer to the implementation of the running module.

As an example of a software functional unit, the running module may include code being run on a computing instance. The computing instance may include at least one of a physical host (computing device), a virtual machine, and a container. Further, there may be one or more computing instances. For example, the running module may include code being run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers with similar geographical locations. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. For cross-region communication between two VPCs in a same region and between VPCs in different regions, a communication gateway needs to be disposed in each VPC, and interconnection between the VPCs is implemented through the communication gateway.

As an example of a hardware functional unit, the running module may include at least one computing device, for example, a server. Alternatively, the running module may also be a device or the like implemented by using an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), generic array logic (generic array logic, GAL), or any combination thereof.

A plurality of computing devices included in the running module may be distributed in the same region, or may be distributed in different regions. The plurality of computing devices included in the running module may be distributed in the same AZ, or may be distributed in different AZs. Similarly, the plurality of computing devices included in the running module may be distributed in the same VPC, or may be distributed in the plurality of VPCs. The plurality of computing devices may be any combination of computing devices such as a server, an ASIC, a PLD, a CPLD, an FPGA, and a GAL.

It should be noted that, in another embodiment, the running module, the obtaining module, and the strategy determining module, and the evolution module may be configured to perform any step in the test case set evolution method, and steps that the running module, the obtaining module, and the strategy determining module, and the evolution module are responsible for implementing may be specified as required. The running module, the obtaining module, and the strategy determining module, and the evolution module respectively implement different steps in the test case set evolution method, to implement all functions of the test case set evolution apparatus. That is, when the test case set evolution apparatus provided in the foregoing embodiment implements evolution of the test case set, division of the foregoing functional modules is merely used as an example for description. During actual application, the foregoing functions may be allocated to different functional modules for implementation based on a requirement. To be specific, an inner structure of the apparatus is divided into different functional modules, to implement all or some of the functions described above. In addition, the test case set evolution apparatus provided in the foregoing embodiment and the test case set evolution method embodiment belong to a same concept. For a specific implementation process thereof, refer to the method embodiment. Details are not described herein again.

The following describes a hardware structure of the computing device in embodiments of this application.

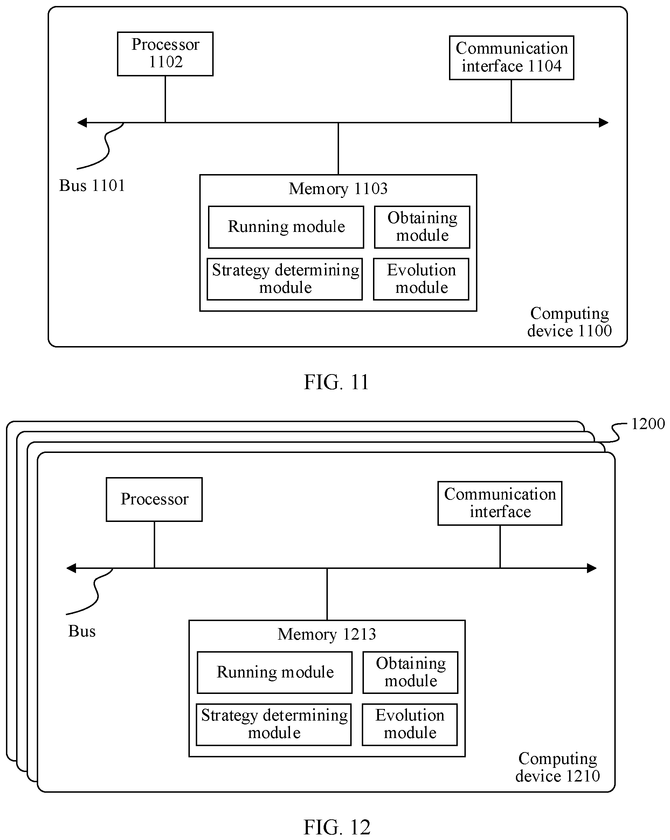

This application provides a computing device 1100. FIG. 11 is a diagram of a hardware structure of a computing device according to an embodiment of this application. As shown in FIG. 11, the computing device 1100 includes a bus 1101, a processor 1102, a memory 1103, and a communication interface 1104. The processor 1102, the memory 1103, and the communication interface 1104 communicate with each other through the bus 1101. The computing device 1100 may be implemented as a server or a terminal. It should be understood that quantities of processors and memories in the computing device 1100 are not limited in this application.

The bus 1101 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 11. However, it does not indicate that there is only one bus or only one type of bus. The bus 1101 may include a path for information transmission between components (for example, the processor 1102, the memory 1103, and the communication interface 1104) of the computing device 1100.

The processor 1102 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1103 may include a volatile memory (volatile memory), for example, a random access memory (random access memory, RAM). The processor 1102 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1103 stores executable program code, and the processor 1102 executes the executable program code to separately implement functions of the running module, the obtaining module, and the strategy determining module, and the evolution module, to implement the test case set evolution method provided in embodiments of this application. In other words, the memory 1103 stores instructions used to perform the test case set evolution method provided in embodiments of this application.

The communication interface 1104 uses a transceiver module such as but not limited to a network interface card or a transceiver, to implement communication between the computing device 1100 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

FIG. 12 is a diagram of a computing device cluster according to an embodiment of this application. Refer to FIG. 12. The computing device cluster 1200 includes at least one computing device 1210. A memory 1213 in the one or more computing devices 1210 in the computing device cluster 1200 may store the same instructions used to perform the test case set evolution method provided in this application. For a hardware structure of the at least one computing device 1210 in the computing device cluster 1200, refer to the descriptions in FIG. 11. Details are not described herein again.

In some possible implementations, the memory 1213 in the one or more computing devices 1210 in the computing device cluster may alternatively store some instructions used to perform the test case set evolution method provided in this application. In other words, a combination of one or more computing devices 1210 may jointly execute instructions used to perform the test case set evolution method provided in this application.

It should be noted that, the memories 1213 in different computing devices 1210 in the computing device cluster may store different instructions, and the different instructions are respectively used to execute some functions of the test case set evolution apparatus. In other words, the instructions stored in the memories 1213 in the different computing devices 1210 may implement functions of one or more of a running module, an obtaining module, and a strategy determining module, and an evolution module.

In some possible implementations, the one or more computing devices 1210 in the computing device cluster 1200 may be connected through a network. The network may be a wide area network, a local area network, or the like. This is not limited in this application.

It should be noted that information (including but not limited to user equipment information, personal information of a user, and the like), data (including but not limited to data used for analysis, stored data, displayed data, and the like), and signals in this application are used under authorization by the user or full authorization by all parties, and capturing, use, and processing of related data need to conform to related laws, regulations, and standards of related countries and regions. For example, both the code file and the test case set in this application are obtained with sufficient authorization.

Terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should be further understood that although the following descriptions use terms such as "first" and "second" to describe various elements, these elements should not be limited by the terms. These terms are simply used to distinguish one element from another. For example, without departing from the scope of the foregoing examples, a first test case may be referred to as a second test case, and similarly, the second test case may be referred to as the first test case. Both the first test case and the second test case may be test cases, and in some cases, may be separate and different test cases.

The term "at least one" in this application means one or more, and the term "a plurality of" in this application means two or more. For example, a plurality of test cases means two or more test cases.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement embodiments, embodiments may be implemented completely or partially in a form of a program product. The program product includes one or more program instructions. When the program instructions are loaded and executed on a computing device, the procedures or functions according to embodiments of this application are all or partially generated.

A person of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A test case set evolution method, wherein the method comprises:
running a first test case set based on a code file;
obtaining running description information in a process of running the first test case set based on the code file;
determining evolution strategy information for the first test case set based on the running description information, wherein the evolution strategy information indicates a target evolution manner of the first test case set; and
obtaining an evolved second test case set based on the evolution strategy information, the code file, and the first test case set.

2. The method according to claim 1, wherein the obtaining running description information in a process of running the first test case set based on the code file comprises at least one of the following:
determining a code segment that is executed in the running process and that is in the code file; and
determining error information in the running description information based on an erroneous test case in which an error occurs in the running process, wherein the error information indicates a case location at which the error occurs in the erroneous test case and a type of the error.

3. The method according to claim 2, wherein the determining evolution strategy information for the first test case set based on the running description information comprises:
determining, based on the code segment that is executed in the running process and that is in the code file, a target code segment that is not executed in the running process and that is in the code file, and determining the target evolution manner indicated by the evolution strategy information, wherein the target evolution manner indicates to add a test case corresponding to the target code segment.

4. The method according to claim 3, wherein the obtaining an evolved second test case set based on the evolution strategy information, the code file, and the first test case set comprises:
when the evolution strategy information indicates to add the test case corresponding to the target code segment, obtaining the target code segment from the code file;
obtaining a reusable code element of the first test case set, wherein the reusable code element is repeatedly used in a plurality of test cases of the first test case set; and
determining a new test case in the second test case set based on the target code segment and the reusable code element, wherein the new test case is used to test the target code segment.

5. The method according to any one of claims 2 to 4, wherein the determining evolution strategy information for the first test case set based on the running description information comprises:
determining, based on the error information and the code file, a code element that is in the code file and that is changed relative to the case location; and
determining, based on the error information and the changed code element, the target evolution manner indicated by the evolution strategy information, wherein the target evolution manner indicates a manner of repairing the case location based on the changed code element.

6. The method according to claim 5, wherein when a compilation error occurs in the erroneous test case, the error information indicates a first case location at which the compilation error occurs and a type of the compilation error; and
the determining, based on the error information and the code file, a code element that is in the code file and that is changed relative to the case location comprises at least one of the following:
when the type of the compilation error indicates an element identifier error, determining, based on the first case location and the code file, an element identifier that is in the code file and that is changed relative to the first case location; and
when the type of the compilation error indicates an element missing error, determining, based on the first case location and the code file, a code element missing at the first case location relative to the code file.

7. The method according to claim 6, wherein the obtaining an evolved second test case set based on the evolution strategy information, the code file, and the first test case set comprises at least one of the following:
when the type of the compilation error indicates the element identifier error, modifying, in the target evolution manner indicated by the evolution strategy information and based on the element identifier that is in the code file and that is changed relative to the first case location, an element identifier at the first case location at which an error occurs, to obtain a repaired test case in the second test case set; and
when the type of the compilation error indicates the element missing error, adding, in the target evolution manner indicated by the evolution strategy information and based on the code element missing at the first case location relative to the code file, an element corresponding to the missing element at the first case location, to obtain the repaired test case in the second test case set.

8. The method according to claim 5, wherein when a running error occurs in the erroneous test case, the error information indicates a second case location at which the running error occurs and a type of the running error; and
the determining, based on the error information and the code file, a code element that is in the code file and that is changed relative to the case location comprises:
when the type of the running error indicates a running result error, determining, based on the second case location and the code file, a target running result corresponding to the second case location in the code file.

9. The method according to claim 8, wherein the obtaining an evolved second test case set based on the evolution strategy information, the code file, and the first test case set comprises:
when the type of the running error indicates the running result error, replacing, in the target evolution manner indicated by the evolution strategy information and based on the target running result in the code file, an expected result that causes the running result error at the second case location, to obtain a repaired test case in the second test case set.

10. The method according to any one of claims 5 to 9, wherein the method further comprises:
in response to a repair viewing operation on the erroneous test case, displaying repair information between the erroneous test case and the repaired test case, wherein the repaired test case is obtained by repairing the case location based on the changed code element, and the repair information indicates difference information between the erroneous test case and the repaired test case.

11. The method according to any one of claims 2 to 10, wherein the obtaining an evolved second test case set based on the evolution strategy information, the code file, and the first test case set comprises:
determining, based on the evolution strategy information, the code file, and the first test case set, a repair failure test case obtained due to a failure to repair the erroneous test case in the target evolution manner in the second test case set.

12. The method according to any one of claims 1 to 11, wherein the running description information comprises redundant information, the redundant information indicates a redundant test case in the first test case set in the running process, and the method further comprises:
displaying a redundant test case list based on the running description information; and
deleting the redundant test case from the first test case set in response to a deletion operation on the redundant test case.

13. A test case set evolution apparatus, wherein the apparatus comprises:
a running module, configured to run a first test case set based on a code file;
an obtaining module, configured to obtain running description information in a process of running the first test case set based on the code file;
a strategy determining module, configured to determine evolution strategy information for the first test case set based on the running description information, wherein the evolution strategy information indicates a target evolution manner of the first test case set; and
an evolution module, configured to obtain an evolved second test case set based on the evolution strategy information, the code file, and the first test case set.

14. The apparatus according to claim 13, wherein the obtaining module is configured to perform at least one of the following:
determining a code segment that is executed in the running process and that is in the code file; and
determining error information in the running description information based on an erroneous test case in which an error occurs in the running process, wherein the error information indicates a case location at which an error occurs in the erroneous test case and a type of the error.

15. The apparatus according to claim 14, wherein the strategy determining module is configured to:
determine, based on the code segment that is executed in the running process and that is in the code file, a target code segment that is not executed in the running process and that is in the code file, and determine the target evolution manner indicated by the evolution strategy information, wherein the target evolution manner indicates to add a test case corresponding to the target code segment.

16. The apparatus according to claim 15, wherein the evolution module is configured to:
when the evolution strategy information indicates to add the test case corresponding to the target code segment, obtain the target code segment from the code file;
obtain a reusable code element of the first test case set, wherein the reusable code element is repeatedly used in a plurality of test cases of the first test case set; and
determine a new test case in the second test case set based on the target code segment and the reusable code element, wherein the new test case is used to test the target code segment.

17. The apparatus according to any one of claims 14 to 16, wherein the strategy determining module comprises:
an element determining unit, configured to determine, based on the error information and the code file, a code element that is in the code file and that is changed relative to the case location; and
a strategy determining unit, configured to determine, based on the error information and the changed code element, the target evolution manner indicated by the evolution strategy information, wherein the target evolution manner indicates a manner of repairing the case location based on the changed code element.

18. The apparatus according to claim 17, wherein when a compilation error occurs in the erroneous test case, the error information indicates a first case location at which the compilation error occurs and a type of the compilation error; and
the element determining unit is configured to perform at least one of the following:
when the type of the compilation error indicates an element identifier error, determining, based on the first case location and the code file, an element identifier that is in the code file and that is changed relative to the first case location; and
when the type of the compilation error indicates an element missing error, determining, based on the first case location and the code file, a code element missing at the first case location relative to the code file.

19. The apparatus according to claim 18, wherein the evolution module is configured to perform at least one of the following:
when the type of the compilation error indicates the element identifier error, modifying, in the target evolution manner indicated by the evolution strategy information and based on the element identifier that is in the code file and that is changed relative to the first case location, an element identifier at the first case location at which an error occurs, to obtain a repaired test case in the second test case set; and
when the type of the compilation error indicates the element missing error, adding, in the target evolution manner indicated by the evolution strategy information and based on the code element missing at the first case location relative to the code file, an element corresponding to the missing element at the first case location, to obtain the repaired test case in the second test case set.

20. The apparatus according to claim 17, wherein when a running error occurs in the erroneous test case, the error information indicates a second case location at which the running error occurs and a type of the running error; and
the element determining unit is configured to:
when the type of the running error indicates a running result error, determine, based on the second case location and the code file, a target running result corresponding to the second case location in the code file.

21. The apparatus according to claim 20, wherein the evolution module is configured to:
when the type of the running error indicates the running result error, replace, in the target evolution manner indicated by the evolution strategy information and based on the target running result in the code file, an expected result that causes the running result error at the second case location, to obtain a repaired test case in the second test case set.

22. The apparatus according to any one of claims 17 to 21, wherein the apparatus further comprises:
a repair display module, configured to: in response to a repair viewing operation on the erroneous test case, display repair information between the erroneous test case and the repaired test case, wherein the repaired test case is obtained by repairing the case location based on the changed code element, and the repair information indicates difference information between the erroneous test case and the repaired test case.

23. The apparatus according to any one of claims 14 to 22, wherein the evolution module is configured to:
determine, based on the evolution strategy information, the code file, and the first test case set, a repair failure test case obtained due to a failure to repair the erroneous test case in the target evolution manner in the second test case set.

24. The apparatus according to any one of claims 13 to 23, wherein the running description information comprises redundant information, the redundant information indicates a redundant test case in the first test case set in the running process, and the apparatus further comprises:
a redundancy display module, configured to display a redundant test case list based on the running description information; and
a deletion module, configured to delete the redundant test case from the first test case set in response to a deletion operation on the redundant test case.

25. A computing device cluster, comprising at least one computing device, wherein each computing device comprises a processor and a memory; and
the processor in the at least one computing device is configured to execute instructions stored in the memory in the at least one computing device, to enable the computing device cluster to perform the test case set evolution method according to any one of claims 1 to 12.

26. A computer-readable storage medium, comprising computer program instructions, wherein when the computer program instructions are executed by a computing device cluster, the computing device cluster performs the test case set evolution method according to any one of claims 1 to 12.

27. A computer program product comprising instructions, wherein when the instructions are run by a computing device cluster, the computing device cluster is enabled to perform the test case set evolution method according to any one of claims 1 to 12.
